# EUROPÄISCHE PATENTSCHRIFT

(11) **EP 3 655 239 B1**
(45) Veröffentlichungstag und Bekanntmachung des Hinweises auf die Patenterteilung: **07.07.2021**
(21) Anmeldenummer: 18750341.2
(22) Anmeldetag: 17.07.2018
(51) Int. Cl.: B29C 65/16, B29C 65/00, B23K 26/00, B23K 26/064, B23K 26/14, B23K 26/21, B23K 26/324, B23K 103/00

(54) **OPTIKKOPF**
OPTICAL HEAD
TÊTE OPTIQUE

(30) Priorität: 18.07.2017 DE 102017116110
(43) Veröffentlichungstag der Anmeldung: 27.05.2020
(73) Patentinhaber: ConsultEngineerIP AG, 6343 Buonas (CH)
(72) Erfinder: GUBLER, Ulrich, 6343 Buonas (CH)
(74) Vertreter: Patentanwälte und Rechtsanwalt Weiß, Arat & Partner mbB
(86) Internationale Anmeldenummer: PCT/EP2018/069330
(87) Internationale Veröffentlichungsnummer: WO 2019/016172

(56) Entgegenhaltungen:
- WO-A1-2014/072326
- CN-A- 101 486 255
- JP-A- 2005 081 396
- Anonymous: "Laser transmission welding of polymers - Industrial Laser Solutions", , 10. Januar 2008 (2008-01-10), XP055505212, Gefunden im Internet: URL:https://www.industrial-lasers.com/arti cles/2008/10/laser-transmission-welding-of -polymers.html [gefunden am 2018-09-06]

## Beschreibung

### Technisches Gebiet

Die Erfindung betrifft einen Optikkopf für eine Vorrichtung zum Laserdurchstrahlschweissen und ein Verfahren zum Verschweissen zweier Fügepartner durch Laserdurchstrahlschweissen.

### Stand der Technik

Verfahren zum Verschweissen von Kunststoffen mittels eines Lasers sind aus dem Stand der Technik bekannt. Bei einem Laserdurchstrahlschweiss-Verfahren ist einer der zu verbindenden bzw. zu verschweissenden Fügepartner in hohem Masse für Laserstrahlen durchlässig, während der andere Fügepartner einen hohen Absorptionsgrad in Bezug auf Laserstrahlen aufweist. Somit sorgt der den einen Fügepartner durchquerende Laserstrahl an einer zwischen beiden Bauteilen befindlichen Fügestelle für eine lokale Erwärmung. Ein für das Verschweissen nötiger Druck wird auf bekannte Weise aufgebaut, indem beide Fügepartner aufeinandergepresst werden.

Es sind zahlreiche Varianten von Vorrichtungen und Verfahren zum Laserdurchstrahlschweissen bekannt.

Beispielsweise sind Vorrichtungen zum Laserdurchstrahlschweissen umfassend einen Optikkopf bekannt. Insbesondere sind Optikköpfe bzw. Bearbeitungsköpfe bekannt, welche ein Gehäuse umfassen, in dessen Inneren sich eine lasertransparente Kugel befindet. Derartige Optikköpfe sind geeignet, beispielsweise zwei zu verschweissende Kunststoff-Fügepartner zu verbinden, indem die Kugel auf entsprechende Fügestellen gepresst wird, und zugleich als Linse für einen zum Schweissen verwendeten Laserstrahl dient, welcher durch die Kugel hindurch auf die Fügestelle gelenkt wird. Vorzugsweise ist die Kugel hierbei beweglich innerhalb des Gehäuses gelagert, so dass der Optikkopf auf einfache Weise entlang einer zu generierenden Schweissnaht bzw. eines Pfads, entlang welchem die Schweissnaht entstehen soll, geführt wird. Hierbei rollt die Kugel auf einer Oberfläche eines der Fügepartner und übt kontinuierlich den für das Verschweissen nötigen Anpressdruck aus.

Derartige Vorrichtungen umfassend einen Optikkopf sind in der EP 1 405 713 B1, in der DE 43 19 742 A1 und in der WO 2014 072 326 A1 offenbart. Vorteilhaft an den Optikköpfen gemäss den vorgenannten Schriften ist unter anderem, dass die zu verschweissenden Fügepartner nicht gleichzeitig an sämtlichen zu verschweissenden Orten bzw. entlang der gesamten Schweissnaht aufeinandergepresst werden müssen, sondern durch die Kugel lediglich ein punktuelles Andrücken an derjenigen Stelle und in demjenigen Moment erfolgt, wo der Laserstrahl auftrifft.

Die EP 1 405 713 B1 offenbart, die Kugel in einer mechanischen Fassung zu lagern, während die Kugel gemäss der WO 2014 072 326 A1 innerhalb des Optikkopfes verschiebbar geführt bzw. gelagert ist, d.h. die Kugel kann zusätzlich zur Rollbewegung innerhalb des Optikkopfes verschoben werden. Hierbei handelt es sich um eine vertikale Verschiebung innerhalb des Optikkopfes senkrecht zur Schweissfläche. Die Kugel wird während des Schweissvorgangs mit Druckluft auf die Fügepartner gepresst. Auch der Optikkopf gemäss der DE 43 19 742 A1 arbeitet mit Druckluft. JP 2005 081396 A offenbart eine Laserschweissvorrichtung und ein Laserschweissverfahren, das zum Laserschweissen fähig ist, während ein Oberflächendruck an einem geschweissten Abschnitt ausreichend sichergestellt wird.

Nachteilig an bekannten Optikköpfen mit einer mechanischen Fassung, beispielsweise einem Luftlager für die Kugel, ist, dass eine maximale Anpresskraft, welche über die Fassung vom Optikkopf auf die Kugel und somit auf die zu verschweissenden Fügepartner übertragen wird, durch die Bauweise der mechanischen Fassung limitiert ist. Aus demselben Grund ist es bislang auch noch nicht möglich, Kugeln mit einem Durchmesser von unter 30 mm in Optikköpfen mit mechanischer Fassung zu verwenden.

Nachteilig an bekannten Optikköpfen mit verschiebbar geführter Kugel ist, dass sich der Fokusabstand abhängig von der Position der Kugel im Optikkopf ändert. Wird die Kugel eines derartigen Optikkopfes mit Druckluft beaufschlagt, um den nötigen Druck auf die Fügepartner zu übertragen, so ist es meist nicht möglich, hohe Kräfte zu übertragen. Die von der Kugel auf die Fügepartner übertragene Kraft und ein daraus resultierender Druck hängen hierbei von zahlreichen Faktoren, unter anderem von einem Durchmesser der Kugel ab. Unter hohen Kräften können in diesem Zusammenhang Kräfte von zumindest etwa 50 N verstanden werden.

Unter einem Fokusabstand wird hierbei der Abstand zwischen der Linse und dem Fokus bzw. Brennpunkt verstanden, auch wenn die eintretende Strahlung nicht kollimiert ist. Demgegenüber ist die Brennweite ein Kennwert einer Linse, welcher sich auf den Fall beschränkt, dass es sich bei dem eintretenden Strahl bzw. der eintretenden Strahlung um kollimierte Strahlung bzw. um ein kollimiertes Strahlenbündel handelt.

Nachteilig an bekannten Optikköpfen mit mechanischer Fassung für die Kugel ist weiterhin, dass sie es oftmals nicht erlauben, zuverlässig eine vordefinierte kleine Kraft auf die Fügepartner auszuüben. Limitierend sind hierbei beispielsweise die Gewichtskraft des Optikkopfes, welche auf die Fügepartner wirkt, sowie eine üblicherweise vorhandene Einrichtung zum Andrücken des Optikkopfes, beispielsweise ein pneumatischer Schlitten, welcher üblicherweise mit zumindest 1 bar betätigt werden muss. Vorrichtungen mit Optikköpfen mit mechanischer Fassung sind meist für hohe Kräfte ausgelegt. Werden jedoch hohe Kräfte von dem Optikkopf auf die Fügepartner übertragen, so kann die Kugel einen Wulst erzeugen und vor sich herschieben, welcher zu Verzug und Faltenwurf führen kann. Bei bekannten Optikköpfen mit verschiebbar gelagerten Kugeln wie vorstehend beschrieben wirkt zwar beispielsweise nicht die Gewichtskraft des gesamten Optikkopfes sondern nur die Gewichtskraft der Kugel auf die zu verbindenden Fügepartner. Bekannte Optikköpfe mit verschiebbar gelagerten Kugeln stellen allerdings dennoch keine Lösung für dieses Problem bereit, weil sich bei Änderung der Kugelposition im Schaft der Fokusabstand signifikant ändern kann, weshalb ein zuverlässiges Verschweissen nicht mehr garantiert ist.

Um dem Faltenwurf und dem Verzug entgegenzuwirken, könnte auch an eine dicke lasertransparente Folie oder eine Glasplatte gedacht sein, welche zwischen die Kugel und die Fügepartner gelegt wird. Dies macht das Schweissverfahren jedoch komplizierter und unflexibler.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führt ein Optikkopf für eine Vorrichtung zum Laserdurchstrahlschweissen gemäss Anspruch 1.

Unter einem Laserstrahl wird im Rahmen der vorliegenden Erfindung vorzugsweise die von einer Laserquelle ausgehende Strahlung verstanden.

Bei der Kugel handelt es sich um eine lasertransparente Kugel. Wenn im Rahmen der vorliegenden Erfindung von einer Kugel die Rede ist, so ist stets eine solche lasertransparente Kugel gemeint.

Gegenüber dem austritts-seitigen Ende kann eine optische Faser, beispielsweise eine Glasfaser oder dergleichen, vorgesehen sein, um den Laserstrahl in das Gehäuse einzuleiten. Dieser durchquert das Gehäuse und die Kugel, welche als Linse fungiert.

Ein derartiger Optikkopf kann beispielsweise in Vorrichtungen zum Konturschweissen zum Einsatz kommen. Hierbei handelt es sich um eine Variante des Laserdurchstrahlschweissens, bei welcher der Optikkopf entlang der zu erzeugenden Schweissnaht geführt wird, wobei der Laserstrahl jeden Punkt auf der Schweissnaht nur ein einziges Mal passiert. Die vorliegende Erfindung kann jedoch auch bei anderen Varianten des Laserdurchstrahlschweissens zum Einsatz kommen.

Die Kugel kann aus einem Material hergestellt sein, dessen Brechungsindex zumindest 1,6 ist. Die Kugel kann vorzugsweise kann aus einem Material hergestellt sein, dessen Brechungsindex zumindest 1,7 ist. Ferner kann auch an Material gedacht sein, dessen Brechungsindex zumindest 1,75 ist. Beispielsweise kann an Materialien gedacht sein, deren Brechungsindex zwischen 1,76 und 2,15 liegt.

Als Material für die Kugel kommt hierbei beispielsweise Saphir, Rubin, Spinel, kubisches Zirconiumdioxid, LAH79, N-SF8, N-LASF44, S-LAH53, LASF35, N-LaSF9, LaSFN9, SLAH58, SLAH65, SLAH71, SLAH79, STiH53, L-BBH1, K-VC89 oder K-PsFn203 in Betracht.

Die Kugel ist vorzugsweise drehbar innerhalb des Gehäuses gelagert, so dass Schweissnähte beliebiger Geometrie erzeugt werden können.

Es kann daran gedacht sein, dass der Durchmesser der Kugel kleiner oder gleich 15 mm misst, vorzugsweise kleiner oder gleich 10 mm.

Es kann daran gedacht sein, an dem Gehäuse eine Rückhalteeinrichtung zum Zurückhalten der Kugel anzuordnen. Vorzugsweise befindet sich diese Rückhalteeinrichtung am austritts-seitigen Ende des Gehäuses.

Die Rückhalteeinrichtung dient einerseits dem Zurückhalten der Kugel, so dass diese nicht aus dem austritts-seitigen Ende herausfallen kann.

Andererseits dient die Rückhalteeinrichtung einem Abdichten des austrittsseitigen Endes des Gehäuses bzw. des Optikkopfes. Wie nachfolgend näher erläutert, wird vorzugsweise Druckluft in den Optikkopf eingeleitet. Hierfür kann ein entsprechender Lufteinlass vorgesehen sein. Diese kann den nötigen Anpressdruck bereitstellen, mit welchem die Kugel auf die zu verbindenden Fügepartner gedrückt wird. Ferner kann diese auch der Bereitstellung eines Luftlagers für die Kugel dienen. Die Fügepartner sind in der Regel Kunststoffteile, beispielsweise Folien oder dergleichen.

Die vorstehend beschriebene Rückhalteeinrichtung ist vorzugsweise nur in Ausführungsformen des Optikkopfes vorgesehen, bei denen die Kugel innerhalb des Gehäuses bzw. innerhalb des Schaftabschnittes verschiebbar gelagert ist, da nur diese Ausführungsformen einer Abdichtung bedürfen. Selbstverständlich weist auch eine nachstehend näher beschriebene Ausführungsform des Optikkopfes umfassend ein Luftlager vorteilhafterweise zumindest ein Mittel zum Zurückhalten der Kugel, so dass diese nicht austritts-seitig aus dem Luftlager herausfallen kann. Ein solches Mittel kann ähnlich der vorstehend beschriebenen Rückhalteeinrichtung aufgebaut sein.

Das Gehäuse kann einen zylindrischen Schaftabschnitt umfassen. In diesem Schaftabschnitt kann die Kugel verschiebbar gelagert sein. Die Kugel kann beispielsweise in Längsrichtung innerhalb des zylindrischen Schaftabschnittes gleitend gelagert sein. Der Optikkopf kann eine Kollimationslinse bzw. einen Kollimator umfassen, welche eingerichtet ist, den Laserstrahl vor dem Auftreffen auf die Kugel im Wesentlichen zu kollimieren.

Bei einer Kollimationslinse handelt es sich in der Regel um eine Sammellinse. Im Rahmen der vorliegenden Erfindung wird einem Strahlengang innerhalb des Optikkopfes von der Eintrittsstelle des Laserstrahls hin zur Kugel folgend jedoch nur dann von einer Sammellinse gesprochen, wenn der Laserstrahl in Richtung auf die Kugel hin fokussiert wird. Wird hingegen beispielsweise der Laserstrahl, welcher von einer punktförmigen Eintrittsstelle in das Gehäuse ausgehende Laserstrahl ausgeht, von einer Sammellinse kollimiert, so dass die auf die Kugel zulaufende Strahlung kollimiert vorliegt, so wird vorliegend stets die Bezeichnung Kollimationslinse gewählt.

Bei sämtlichen Ausführungsformen der vorliegenden Erfindung ist vorzugsweise ein Druckluft-Einlass vorgesehen.

Ist die Kugel im Schaftabschnitt verschiebbar gelagert, so dient Druckluft, welche über den Druckluft-Einlass in das Innere des Optikkopfes geleitet wird, dazu, die Kugel in Richtung auf das austritts-seitige Ende hin wirkenden Kraft zu beaufschlagen. Die Kugel wird während des Schweissvorgangs vorzugsweise allein durch die Druckluft auf die zu verschweissenden Fügepartner gepresst.

Vorzugsweise ist die Kollimationslinse derart im Optikkopf angeordnet, um den Laserstrahl unmittelbar vor dem Auftreffen auf die Kugel zu kollimieren oder zumindest im Wesentlichen zu kollimieren. Trifft ein kollimierter Strahl auf die Kugel auf, so ändert sich der Fokusabstand nicht in Abhängigkeit von einer Position der Kugel im Schaft. Wäre der Strahl hingegen unmittelbar vor dem Auftreffen auf die Kugel auseinanderlaufend oder zusammenlaufend (divergent oder konvergent), so würde sich der Fokusabstand in Abhängigkeit von der Position der Kugel im Schaft ändern.

Unter einem unmittelbar vor dem Auftreffen auf die Kugel stattfindenden Kollimieren wird verstanden, dass der Laserstrahl nach dem Kollimieren und vor dem Auftreffen auf die Kugel nicht mehr in einen divergierenden oder konvergierenden Strahl umgewandelt wird. Zwischen der Kollimationslinse und der Kugel befinden sich bei einer solchen Ausführungsform daher vorzugsweise keine weiteren optischen Einrichtungen, welche den Strahl beeinflussen, insbesondere keine Linsen, welche einen konvergenten bzw. divergenten Strahl erzeugen.

Im Vergleich mit bekannten Optikköpfen, bei denen die Kugel verschiebbar geführt ist, bewirkt die Kombination aus einem unmittelbar vor dem Auftreffen auf die Kugel kollimierten Strahl und einer Kugel mit hohem Brechungsindex, dass eine Veränderung der Kugelposition innerhalb des Schafts sich weniger auf den Fokusabstand auswirkt, und dass der Brennpunkt möglichst nahe an der Kugel liegt. Unter einem hohen Brechungsindex wird hierbei vorzugsweise ein solcher verstanden, der höher als derjenige von Quarzglas, beispielsweise höher als 1,45 oder sogar höher als 1,7. Eine solche Ausführung kommt insbesondere in Betracht, wenn die Kugel über Druckluft mit einer Kraft von weniger als 150 N, beispielsweise weniger als 120 N, oder weniger als 100 N oder weniger als 80 N oder sogar weniger als 50 N beaufschlagt wird.

Der Optikkopf kann eingerichtet sein, so dass eine Spotgrösse durch eine Einbauhöhe und/oder eine Beschaffenheit der Kollimationslinse bestimmt wird. Dies gilt für sämtliche Ausführungsformen des erfindungsgemässen Optikkopfes.

Unter einer Spotgrösse wird hierbei ein Durchmesser des Laserstrahls an der Fügestelle verstanden. Je weiter die Fügestelle vom Fokus bzw. Brennpunkt der Kugel entfernt liegt, desto grösser die Spotgrösse.

Einem alternativen Ausführungsbeispiel gemäss kann daran gedacht sein, dem Gehäuse ein Luftlager zur Lagerung der Kugel zuzuordnen, welches eine Öffnung zur Durchleitung des Laserstrahls umfasst. Ferner kann daran gedacht sein, in dem Optikkopf eine Sammellinse anzuordnen, welche derart beschaffen und/oder im Gehäuse angeordnet ist, dass der Laserstrahl vor dem Eintreffen auf die Kugel fokussiert wird. Diese Fokussierung erfolgt hierbei vorzugsweise derart im Bereich der Öffnung, also innerhalb der Öffnung oder unmittelbar vor oder nach der Öffnung, so dass die Öffnung möglichst klein gehalten werden kann.

Die Öffnung kann einen Durchmesser von maximal 4 mm umfassen. Vorzugsweise misst der Durchmesser der Öffnung maximal 2 mm.

Vorzugsweise umfasst das Luftlager zusätzlich zur Öffnung noch zumindest eine Ausnehmung zum Durchtritt von Druckluft.

Die vorliegende Erfindung umfasst auch ein Verfahren zum Verschweissen zweier Fügepartner durch Laserdurchstrahlschweissen mittels eines Optikkopfes umfassend eine Kugel wie vorstehend beschrieben.

Die Spotgrösse des Laserstrahls kann bei sämtlichen Ausführungsformen der vorliegenden Erfindung durch die Einbauhöhe und/oder die Beschaffenheit der Kollimationslinse ausgewählt werden.

Der Laserstrahl kann unmittelbar vor dem Auftreffen auf die Kugel kollimiert werden. Dadurch ist der Fokusabstand des die Kugel austritts-seitig verlassenden Laserstrahls nicht abhängig von der Position der Kugel innerhalb des Schafts. Anders ausgedrückt ist im Falle eines vor dem Auftreffen auf die Kugel kollimierten Laserstrahls ein Eintrittswinkel des Laserstrahls unabhängig von der Position der Kugel stets identisch, weshalb dasselbe für den Austrittswinkel des Laserstrahls gilt.

Alternativ kann daran gedacht sein, dass der Laserstrahl vor dem Eintreffen auf die Kugel fokussiert wird. Dies ist besonders sinnvoll, wenn die Kugel in einem Luftlager umfassend eine Öffnung zum Durchtritt des Laserstrahls gelagert ist. Hierbei ist es vorteilhaft, die Öffnung möglichst klein zu gestalten, um damit das Luftlager grosse Kräfte auf die Kugel übertragen kann. Hierbei wird der Laserstrahl vorzugsweise im Bereich der Öffnung fokussiert.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
Figur 1 einen bekannten Optikkopf 1, in welchem die Kugel 3 verschiebbar geführt ist,
Figur 2 einen Optikkopf 1 gemäss einer ersten Ausführungsform der vorliegenden Erfindung,
Figur 3 unterschiedliche Verläufe des Laserstrahls 5 im Optikkopf nach Figur 2 für Kugeln 3 mit unterschiedlichem Brechungsindex,
Figur 4 den Optikkopf 1 nach Figur 2 in Nicht-Betriebslage,
Figur 5 einen bekannten Optikkopf 1, in welchem die Kugel in einem Luftlager 10 gelagert ist,
Figur 6 einen Optikkopf 1 gemäss einer zweiten Ausführungsform der vorliegenden Erfindung,
Figur 7 unterschiedliche Verläufe des Laserstrahls 5 im Optikkopf nach Figur 6 für Kugeln 3 mit unterschiedlichem Brechungsindex,
Figur 8 unterschiedliche Verläufe des Laserstrahls 5 im Optikkopf nach Figur 6 für unterschiedliche Kollimationslinsen 7, sowie in
Figur 9 eine vergrösserten Ausschnitt aus Figur 6.

### Ausführungsbeispiel

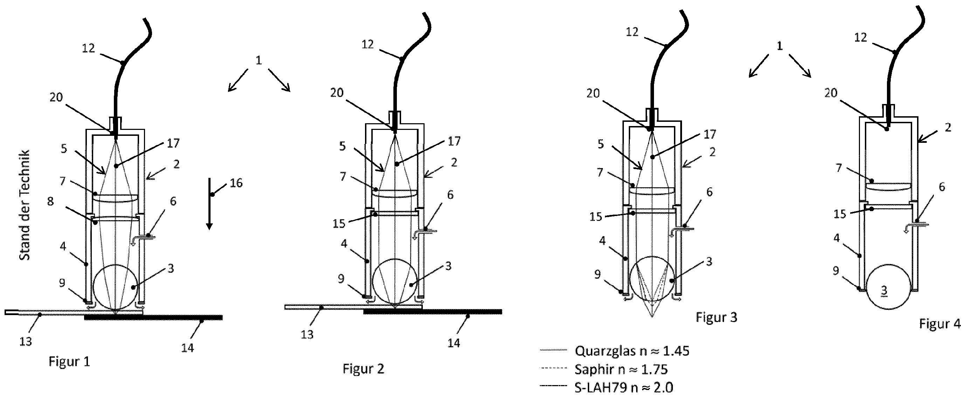

In Figur 1 ist ein Optikkopf 1 gemäss dem Stand der Technik dargestellt. Eine Kugel 3 befindet sich in einem in Bezug auf einen Laserstrahl 5 bzw. Strahlenverlauf 5 austritts-seitigen Ende eines Gehäuses 2. Zu erkennen sind ferner ein zylindrischer Schaftabschnitt 4, eine Rückhalte-Einrichtung 9 am austritts-seitigen Ende, ein Druckluft-Einlass 6 sowie eine optische Faser 12, eine Kollimationslinse 7 und eine Sammellinse 8. Ausserdem sind zu verschweissende Fügepartner 13, 14 dargestellt.

Figur 2 zeigt einen Optikkopf 1 gemäss einem ersten Ausführungsbeispiel der vorliegenden Erfindung. Dieser unterscheidet sich vom bekannten Optikkopf 1 nach Figur 1 einerseits hinsichtlich der Sammellinse 8, welche durch eine Abdichtplatte 15 ersetzt wurde, und andererseits hinsichtlich eines Brechungsindexes des Materials, aus welchem die Kugel 3 gefertigt ist.

In Figur 3 sind unterschiedliche Verläufe des Laserstrahls 5 im Optikkopf 1 nach Figur 2 für Kugeln 3 mit unterschiedlichem Brechungsindex dargestellt.

Figur 4 zeigt den Optikkopf 1 gemäss den Figuren 2 und 3 in einer Nicht-Betriebslage.

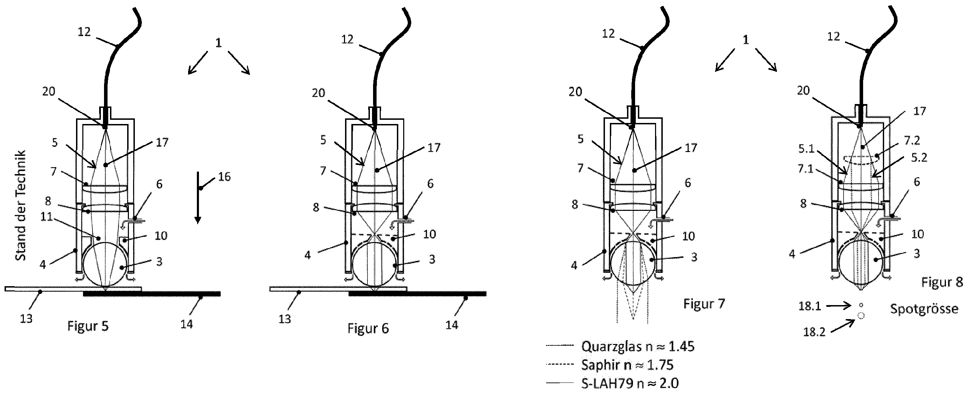

Figur 5 zeigt einen weiteren Optikkopf 1 gemäss dem Stand der Technik. Neben einigen bereits in Bezug auf Figur 1 beschriebenen Merkmalen umfasst dieser Optikkopf 1 ein Luftlager 10.

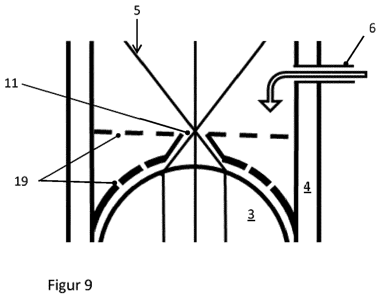

Figur 6 zeigt einen Optikkopf 1 gemäss einem zweiten Ausführungsbeispiel der vorliegenden Erfindung. Dieser unterscheidet sich vom bekannten Optikkopf 1 nach Figur 5 einerseits hinsichtlich einer Beschaffenheit der Sammellinse 8 und andererseits hinsichtlich eines Brechungsindexes des Materials, aus welchem die Kugel 3 gefertigt ist. Ferner ist in Figur 6 erkennbar, dass das Luftlager 10 zusätzlich zur mittigen Öffnung 11 über weitere Ausnehmungen 19 zum Durchtritt von Druckluft verfügt. Die Öffnung 11 und die Ausnehmungen 19 sind in den Figuren 6 bis 8 nicht näher bezeichnet, jedoch in der Figur 9 deutlich erkennbar.

In Figur 7 sind unterschiedliche Verläufe des Laserstrahls 5 im Optikkopf 1 nach Figur 6 für Kugeln 3 mit unterschiedlichem Brechungsindex dargestellt.

In Figur 8 sind unterschiedliche Verläufe des Laserstrahls 5 im Optikkopf 1 nach Figur 6 dargestellt für unterschiedliche Kollimationslinsen 7.1, 7.2.

Figur 9 zeigt einen vergrösserten Ausschnitt aus Figur 6 um die mittige Öffnung 11.

Bezugnehmend auf die Figuren 1 bis 9 erklärt sich die Funktionsweise des erfindungsgemässen Optikkopfes 1 folgendermassen:
Der in Figur 1 dargestellte bekannte Optikkopf 1 befindet sich über einem Schweisspunkt bzw. einer Fügestelle, an welcher die Fügepartner 13, 14 durch Verschweissen miteinander verbunden werden sollen. Der Optikkopf 1 wird in einem geringen Abstand oberhalb des lasertransparenten Fügepartners 13 geführt. Die Kugel 3 wird mit Druckluft beaufschlagt, welche über den Druckluft-Einlass 6 in das Innere des Gehäuses 2 eingeleitet wird. Somit wird die Kugel 3 mit einer in Richtung eines Pfeils 16 wirkenden Kraft beaufschlagt und presst die Fügepartner 13, 14 zusammen. Über eine Zufuhr der Druckluft kann ein Anpressdruck, welcher von der Kugel 3 auf die Fügepartner 13, 14 übertragen wird, bestimmt werden. Ein Teil der eingeleiteten Druckluft entweicht am austritts-seitigen Ende, was dort durch nicht näher bezeichnete Pfeile angedeutet ist. Der aus der optischen Faser 12 austretende Laserstrahl 5 wird zunächst durch die Kollimationslinse 7 kollimiert und sodann durch die Sammellinse 8 und die ebenfalls als Sammellinse wirkende Kugel 3 fokussiert. Der Fokus des Laserstrahls 5 liegt dann in einer zwischen beiden Fügepartnern 13, 14 befindlichen Fügestelle, wo beide Fügepartner 13, 14 verschweisst werden.

Die Kugel 3 ist im Schaft 4 verschiebbar geführt, d.h. sie kann sich in Richtung des Pfeils 16 oder in entgegengesetzter Richtung innerhalb des Schaftabschnitts 4 bewegen. Da der Laserstrahl 5 zwischen der Sammellinse 8 und der Kugel 3 konvergiert, was in Figur 1 deutlich zu erkennen ist, ändert sich ein Eintrittswinkel des Laserstrahls 5 in die Kugel 3 abhängig von der Position der Kugel 3 innerhalb des Schaftabschnitts 4.

Die Sammellinse 8 dichtet den zylindrischen Schaftabschnitt 4 nach oben hin ab, so dass die eintretende Druckluft zur Kugel 3 hin geleitet wird, vgl. den nicht näher bezeichneten Pfeil innerhalb des Druckluft-Einlasses 6 in Figur 9.

Wird der Optikkopf 1 bzw. das Gehäuse 2 mit konstanter Höhe über die zu verschweissenden Fügepartner 13, 14 bewegt und passiert hierbei einen Abschnitt, an welchem zumindest einer der Fügepartner 13, 14 besonders dick oder dünn ausgestaltet ist, so wird die Kugel 3 entsprechend ein Stück weit in Pfeilrichtung 16 oder entgegen der Pfeilrichtung 16 verschoben. Obwohl eine Strecke, welche die Kugel 3 hierbei entlang oder entgegen der Pfeilrichtung 16 zurücklegt, oft lediglich einen Bruchteil ihres Durchmessers ausmacht, so kann es aus den nachstehend geschilderten Gründen bereits zu einer signifikanten Änderung des Brennpunkts bzw. Fokus führen.

In einem bekannten Optikkopf 1 nach Figur 1 wird der Brennpunkt einerseits durch die Änderung eines Eintrittswinkels in oder entgegen der Pfeilrichtung 16 verschoben, sofern die Positionen der Fügepartner 13, 14 und des Gehäuses 2 unverändert bleiben. Dies folgt aus den bekannten Gesetzen der Optik, gemäss denen der Laserstrahl 5 beim Übertritt in die Kugel 3, also in das optisch dichtere Medium, zum Lot hin gebrochen wird.

Werden die Positionen der Fügepartner 13, 14 und des Gehäuses 2 beibehalten, so verändert sich die Lage des Brennpunkts andererseits durch die veränderte Position der Kugel 3 innerhalb des Schaftabschnitts 4, weil eine Austrittsstelle, an welcher der Laserstrahl 5 die Kugel 3 verlässt, entlang oder entgegen der Pfeilrichtung 16 verschoben wurde. Abhängig von einer Ausgestaltung des Optikkopfes 1 sind beide Effekte oftmals gleichwirkend, d.h. bei einer Verschiebung der Kugel 3 in Pfeilrichtung 16 addieren sich oftmals die beiden vorgenannten Effekte, welche die Lage des Brennpunkts beeinflussen. Daher ergibt sich bei einem bekannten Optikkopf 1 gemäss Figur 1 bereits bei geringfügigen Positionsänderungen der Kugel 3 innerhalb des Gehäuses 2 bzw. innerhalb des Schaftabschnitts 4 eine signifikante Änderung des Brennpunkts in oder entgegen der Pfeilrichtung 16.

In dem Optikkopf 1 gemäss einem ersten Ausführungsbeispiel der vorliegenden Erfindung nach Figur 2 verläuft der kollimierte Laserstrahl 5 nach der Kollimationslinse 7 parallel zur optischen Achse 17 der als Linse wirkenden Kugel 3. Der vorstehend geschilderte erste Effekt betreffend unterschiedliche Eintrittswinkel in Abhängigkeit von der Position der Kugel 3 entlang der Pfeilrichtung 16 tritt somit nicht auf.

Aus Figur 3 geht hervor, dass sich durch die Wahl eines Materials mit hohem Brechungsindex n die Fokussierungsmöglichkeiten deutlich verbessern lassen. Je höher der Brechungsindex n des Materials, aus welchem die Kugel 3 hergestellt ist, desto höher, d.h. desto näher an der Kugel 3, befindet sich der Brennpunkt bzw. Fokus.

Die Figuren 1 bis 3 zeigen jeweils einen Optikkopf 1 in Betriebslage, wobei in Figur 3 die Fügepartner 13, 14 der besseren Übersicht halber nicht dargestellt sind. Figur 4 zeigt demgegenüber den Optikkopf 1 nach den Figuren 2 und 3 in Nicht-Betriebslage.

Aus Figur 4 geht hervor, dass die Kugel 3 sich in Nicht-Betriebslage in Richtung des Pfeils 16 bewegt und das austritts-seitige Ende des Gehäuses 2 gemeinsam mit der Rückhalte-Einrichtung 9 abdichtet. Dies wird auch durch den Vergleich von nicht näher bezeichneten Pfeilen nahe des Druckluft-Einlasses 6 und des austrittsseitigen Endes in den Figuren 1 bis 4 deutlich. In der Nicht-Betriebslage nach Figur 4 tritt keine Luft am austritts-seitigen Ende aus. Demgegenüber zwängt sich in der Betriebslage, welche in den Figuren 2 und 3 dargestellt ist, stets eine gewisse Menge der Druckluft zwischen dem Inneren des Schaftabschnitts 4 und der Oberfläche der Kugel 3 hindurch und verlässt das Gehäuse 2 am austritts-seitigen Ende. Die Rückhalte-Einrichtung 9 sorgt vorzugsweise einerseits dafür, dass die Kugel 3 nicht aus dem Gehäuse 2 herausfallen kann. Andererseits dichtet sie in Nicht-Betriebslage gemeinsam mit der Kugel 3 das austritts-seitige Ende ab.

Die Abdichtplatte 15 sorgt genauso wie die Sammellinse 8 des bekannten Optikkopfes nach Figur 1 dafür, dass die Druckluft zur Kugel 3 hin geleitet wird.

Die Figuren 6 bis 8 zeigen eine zweite Ausführungsform der vorliegenden Erfindung, welche einen Optikkopf 1 nach dem Stand der Technik verbessert, der in Figur 5 gezeigt ist.

Die Funktion des Optikkopfes 1 gemäss Figur 5 ergibt sich weitgehend analog zur vorstehend beschriebenen Funktion der Optikköpfe 1 nach den Figuren 1 bis 4. Allerdings ist die Kugel 3 nicht entlang des Schaftabschnitts 4 verschiebbar geführt, sondern in einem Luftlager 10 gelagert. Der auf die Fügepartner 13, 14 ausgeübte Druck resultiert somit nicht wie bei den Optikköpfen 1 nach den Figuren 1 bis 4 aus der durch Druckluft bewirkten Kraft, mit welcher die Kugel 3 entlang des Pfeils 16 beaufschlagt wird. Stattdessen resultiert dieser Druck bei den Optikköpfen 1 gemäss den Figuren 5 bis 8 aus derjenigen Kraft, mit welcher der gesamte Optikkopf 1 auf die Fügepartner 13, 14 gepresst wird. Zwar wird auch in den Optikköpfen 1 gemäss den Figuren 5 bis 8 Druckluft über einen entsprechenden Druckluft-Einlass 6 in das Innere des Gehäuses 2 eingeleitet. Allerdings dient diese Druckluft allein der Bereitstellung des funktionalen Luftlagers 10, welches sicherstellt, dass die Kugel 3 frei drehen kann.

Der bekannte Optikkopf 1 nach Figur 5 wird gegenüber dem Optikkopf nach Figur 1 bevorzugt verwendet, wenn beispielsweise hohe Kräfte über die Kugel 3 auf die Fügepartner 13, 14 übertragen werden sollen. Bei einer Ausführungsform nach Figur 1 ist dann oftmals der erforderliche Luftdruck, welcher über den Druckluft-Einlass 6 im Gehäuse 2 aufgebaut werden muss, zu hoch. Ferner ist oftmals auch der Luftfluss zu hoch, d.h. es entweicht austritts-seitig so viel Luft, dass die Kugel 3 nicht mit dem erforderlichen Druck beaufschlagt werden kann.

In dem Optikkopf 1 gemäss dem zweiten Ausführungsbeispiel der vorliegenden Erfindung, welcher in Figur 6 dargestellt ist, ist die Sammellinse 8 derart beschaffen und/oder im Gehäuse 2 angeordnet, dass der Laserstrahl 5 vor dem Eintreffen auf die Kugel 3 fokussiert wird. Man kann hierbei von einem Zwischenfokus bzw. Zwischenfokussieren sprechen, welches vor einem für das Verschweissen notwendigen Fokussieren des Laserstrahls 5 nach dessen Austritt aus der Kugel 3 an der Fügestelle zwischen den Fügepartnern 13, 14 erfolgt.

Wie aus einem Vergleich der Figuren 5 und 6 deutlich hervorgeht, ermöglicht der zwischen der Sammellinse 8 und der Kugel 3 liegende Brennpunkt der Sammellinse 8 die Minimierung eines Durchmessers der Öffnung 11 des Luftlagers 10. Hierbei ist zu beachten, dass die Bezugsziffer 11 der Übersicht halber nur in den Figuren 5 und 9, nicht jedoch in den Figuren 6 bis 8 dargestellt ist.

Aus Figur 7 geht deutlich hervor, dass durch Verwendung eines Materials mit hohem Brechungsindex n von beispielsweise 1,75 oder 2,0 der Brennpunkt des die Kugel 3 verlassenden Laserstrahls deutlich näher bei der Kugel 3 liegt als im Falle der Verwendung von Materialien mit niedrigem Brechungsindex n wie beispielsweise 1,45.

Das Luftlager 10 gemäss den Figuren 6 bis 8 umfängt im Vergleich zum Luftlager 10 nach Figur 5 einen wesentlich grösseren Abschnitt der Kugel 3. Insbesondere ist die (in den Figuren 6 bis 8 nicht mit Bezugsziffern versehene) Öffnung 11 im Wesentlichen auf einen Abschnitt rund um die optische Achse 17 beschränkt. Das Luftlager 10 gemäss den Figuren 6 bis 8 ermöglicht eine deutlich bessere Übertragung einer auf das Gehäuse 2 wirkenden Kraft auf die Fügepartner 13, 14, da das Luftlager 10 auch einen dem Schweisspunkt im Wesentlichen gegenüberliegenden Bereich der Kugel 3 umfängt. Die Kraftübertragung in Pfeilrichtung 16 ist umso effektiver, je näher der Angriffspunkt der zu übertragenden Kraft einem Bereich kommt, welcher dem Schweisspunkt im Wesentlichen gegenüberliegt.

Aus einem Vergleich der Figuren 5 bis 7 geht hervor, dass der vorliegenden Erfindung unter anderem die Erkenntnis zu Grunde liegt, dass die Öffnung 11 bekannter Optikköpfe 1 mit einer Kugel 3 aus Quarzglas deshalb einen so grossen Durchmesser hat, weil ein Laserstrahl 5, welcher in stärkerem Masse als der Laserstrahl 5 nach Figur 5 konvergiert, nach der Durchquerung der Kugel 3 einen sehr weit von der Kugel 3 entfernt liegenden Brennpunkt aufweisen würde, wenn die Sammellinse 8 einen Zwischenfokus vor der Kugel 3 bewirkt. Der Grund hierfür ist, dass die Kugel 3 bekannter Optikköpfe 1 meist aus einem Material gefertigt ist, dessen Brechungsindex n unter 1,75, meist sogar deutlich unter 1,7 liegt. Wird hingegen ein Material mit hohem Brechungsindex n, beispielsweise 1,8 oder sogar 2,0 verwendet, so kann die Öffnung 11 verkleinert und der Laserstrahl 5 im Bereich der Öffnung 11 fokussiert werden, wie in den Figuren 6 bis 8 gezeigt.

Bei einem bekannten Optikkopf 1 gemäss Figur 5 ist das Luftlager 10 limitierend für die maximal zu übertragende Kraft. Das bekannte Luftlager 10 gemäss Figur 5 erlaubt es einerseits nicht, Kräfte über 150 N auf die Fügepartner zu übertragen. Andererseits war es bislang nicht möglich, Kugeln 3 mit kleinem Durchmesser von beispielsweise unter 30 mm einzusetzen, da die Luftlager 10 bei derart kleinen Kugeln 3 bereits bei einer Übertragung von Kräften unter 150 N an ihre Grenze stiessen. Die Ausführungsformen gemäss den Figuren 6 bis 8 erlauben es, Kräfte von mehr als 150 N zu übertragen sowie deutlich kleinere Kugeln 3 zu verwenden, beispielsweise solche mit einem Durchmesser von weniger als 15 mm.

In Figur 8 ist gezeigt, wie sich die Anordnung unterschiedlich beschaffener Kollimationslinsen 7.1, 7.2 mit unterschiedlicher Einbauhöhe auf den Brennpunkt auswirkt. Die Brennweite der Kollimationslinse 7.1 ist grösser als die Brennweit der Kollimationslinse 7.2. Entsprechend erzeugt die Kollimationslinse 7.1, wenn sie wie in Figur 8 in das Gehäuse 2 eingebaut ist, einen Strahl 5.1 mit breiterem Durchmesser. Dies wiederum führt zu einer kleinen Spotgrösse 18.1 im Brennpunkt.

Die Spotgrössen 18.1, 18.2 für die Strahlverläufe 5.1, 5.2 sind hierbei in Figur 8 für den Fall angedeutet, dass die Fügepartner 13, 14 angeordnet sind wie in Figur 6 gezeigt.

Im Vergleich zur Kollimationslinse 7.1 ist in Figur 8 eine weitere Kollimationslinse 7.2 gestrichelt dargestellt. Diese führt zu einem Laserstrahl 5.2 mit geringerem Durchmesser, ebenfalls gestrichelt dargestellt. Die Spotgrösse 18.2 dieses Laserstrahls 5.2 im Brennpunkt ist grösser als die Spotgrösse 18.1 beim Laserstrahl 5.1.

Obwohl nur eine/einige bevorzugte Ausführungsbeispiele der Erfindung beschrieben und dargestellt wurden, ist es offensichtlich, dass der Fachmann zahlreiche Modifikationen hinzufügen kann, ohne Wesen und Umfang der Erfindung zu verlassen.

So muss der Schaftabschnitt 4 in den Ausführungsformen nach den Figuren 6 bis 8 nicht zylindrisch sein, da im Gegensatz zur Ausführungsform gemäss den Figuren 2 bis 4 die Kugel 3 nicht verschiebbar im Schaftabschnitt 4 gelagert ist.

Die unterschiedlichen Strahldurchmesser, welche in Figur 8 gezeigt sind, könnten auch auf andere Weise als durch unterschiedliche Kollimationslinsen 7.1, 7.2 mit unterschiedlicher Einbauhöhe bewirkt werden. Selbstverständlich könnte es auch ausreichend sein, eine Kollimationslinse 7 mit unterschiedlicher Beschaffenheit aber derselben Einbauhöhe vorzusehen, um den Strahldurchmesser zu verändern.

Alternativ kann auch daran gedacht sein, ausschliesslich die Einbauhöhe der Kollimationslinse 7 zu verändern. Hierbei muss allerdings beachtet werden, dass wegen der gleichbleibenden Brennweite der Kollimationslinse 7 die Strahlung, welche die Kollimationslinse 7 in Richtung Kugel 3 verlässt, nicht mehr vollständig kollimiert vorliegt. Dies ist nur der Fall, wenn, wie in den Figuren 1 bis 3 und 5 bis 8 dargestellt, der Brennpunkt der Kollimationslinse 7 mit einer Eintrittsstelle 20 der Strahlung aus der optischen Faser 12 zusammenfällt.

Es könnte auch daran gedacht sein, die Höhe der Kollimationslinse 7 während des Betriebs des Optikkopfes 1 bzw. in Betriebspausen zu verändern. Hierzu müssten das Gehäuse 2 und die Kollimationslinse 7 mit entsprechenden Einrichtungen zur Höhenveränderung ausgestattet sein. Wie vorstehend erwähnt wäre dann zwar der auf der Kugel 3 (Figuren 2 und 3) bzw. auf der Sammellinse 8 (Figuren 6 bis 8) eintreffende Laserstrahl 5 nicht mehr vollständig kollimiert, sondern würde in gewissem Umfang divergieren oder konvergieren. Allerdings könnte eine solche Ausführungsform eine gewisse Feineinstellung erlauben, solange die Divergenz bzw. Konvergenz des Laserstrahls 5 sich innerhalb handhabbaren Grenzen bewegt.

In Bezug auf die Figuren 6 bis 8 könnte ferner daran gedacht sein, die Kombination aus Kollimationslinse 7 und Sammellinse 8 durch eine einzige ausreichen stark fokussierende Linse zu ersetzen, welche ebenfalls ein Zwischenfokussieren im Bereich der Öffnung 11 bewirkt. Hierbei sollte jedoch beachtet werden, dass kollimierte Abschnitt des Laserstrahls 5 es erlaubt, beispielsweise eine Länge des Gehäuses 2 anzupassen und gegebenenfalls weitere, die Kollimation nicht verändernde, optische Elemente in den Strahlengang einzufügen, ohne dass zusätzliche Linsen oder dergleichen benötigt werden.

Die in den Figuren 2 bis 4 dargestellte Rückhalteeinrichtung 9 kann eine Facette sein.

Die in den Figuren 6 bis 9 erkennbaren Ausnehmungen 19 des Luftlagers 10 sind vorteilhaft, aber nicht essentiell. Einem einfachen Ausführungsbeispiel nach kann auf diese Ausnehmungen 19 kann auch verzichtet werden.

Das Luftlager 10 kann selbstverständlich anders ausgestaltet sein. Es kann sich beispielsweise um eine anders ausgestaltete konkave oder zumindest teilweise konkave Hinterschneidung handeln, welche komplementär oder zumindest teilweise komplementär zur Kugel 3 ausgebildet ist.

**Bezugszeichenliste**

| | | | | | |
|---|---|---|---|---|---|
| 1 | Optikkopf | 34 | | | |
| 2 | Gehäuse | 35 | | | |
| 3 | Kugel | 36 | | | |
| 4 | Zylindrischer Schaftabschnitt | 37 | | | |
| 5 | Laserstrahl | 38 | | | |
| 6 | Druckluft-Einlass | 39 | | | |
| 7 | Kollimationslinse | 40 | | | |
| 8 | Sammellinse | 41 | | | |
| 9 | Rückhalte-Einrichtung | 42 | | | |
| 10 | Luftlager | 43 | | | |
| 11 | Öffnung | 44 | | | |
| 12 | Optische Faser | 45 | | | |
| 13 | Lasertransparenter Fügepartner | 46 | | | |
| 14 | Laserabsorbierender Fügepartner | 47 | | | |
| 15 | Abdichtplatte | 48 | | | |
| 16 | Pfeil / Pfeilrichtung | 49 | | | |
| 17 | Optische Achse | 50 | | | |
| 18 | Spotgrösse | 51 | | | |
| 19 | Ausnehmung | 52 | | | |
| 20 | Eintrittsstelle | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Optikkopf (1) für eine Vorrichtung zum Laserdurchstrahlschweissen umfassend ein Gehäuse (2) mit einem in Bezug auf einen Laserstrahl (5) austritts-seitigen Ende und eine in dem Gehäuse (2) gelagerte Kugel (3), wobei die Kugel (3) aus einem Material hergestellt ist, dessen Brechungsindex grösser als 1,45 ist, **dadurch gekennzeichnet, dass** dem Gehäuse (2) ein Luftlager (10) zur Lagerung der Kugel (3) zugeordnet ist, welches eine Öffnung (11) zur Durchleitung des Laserstrahls (5) umfasst,
wobei der Optikkopf (1) ferner eine Sammellinse (8) umfasst, welche derart beschaffen und/oder im Gehäuse angeordnet ist, dass der Laserstrahl (5) vor dem Eintreffen auf die Kugel (3) fokussiert wird, und wobei die Öffnung im Durchmesser maximal 4 mm misst.

2. Optikkopf (1) nach Anspruch 1, **dadurch gekennzeichnet, dass** die Kugel (3) aus einem Material hergestellt ist, dessen Brechungsindex zumindest 1,6, vorzugsweise zumindest 1,7 ist.

3. Optikkopf (1) nach einem der vorhergehenden Ansprüche, **dadurch gekennzeichnet, dass** der Durchmesser der Kugel (3) kleiner oder gleich 15 mm misst, vorzugsweise kleiner oder gleich 10 mm.

4. Optikkopf (1) nach einem der vorhergehenden Ansprüche, **gekennzeichnet durch** eine an dem Gehäuse (2) angeordnete Rückhalteeinrichtung (9) zum Zurückhalten der Kugel (3).

5. Optikkopf (1) nach einem der vorhergehenden Ansprüche, wobei die Kugel (3) in einem zylindrischen Schaftabschnitt (4) des Gehäuses (2) verschiebbar gelagert ist, **gekennzeichnet durch** eine Kollimationslinse (7), welche eingerichtet ist, den Laserstrahl (5) vor dem Auftreffen auf die Kugel (3) im Wesentlichen zu kollimieren.

6. Optikkopf (1) nach Anspruch 5 , **dadurch gekennzeichnet, dass** eine Spotgrösse (18) durch eine Einbauhöhe und/oder eine Beschaffenheit der Kollimationslinse (7) bestimmt wird.

7. Optikkopf (1) nach zumindest einem der Ansprüche 1 bis 6, **dadurch gekennzeichnet, dass** die Öffnung im Durchmesser maximal 2 mm misst.

8. Optikkopf (1) nach einem der Ansprüche 1 oder 7, **dadurch gekennzeichnet, dass** das Luftlager (10) zusätzlich zur Öffnung (11) noch zumindest eine Ausnehmung (19) zum Durchtritt von Druckluft umfasst.

9. Verfahren zum Verschweissen zweier Fügepartner (13, 14) durch Laserdurchstrahlschweissen mittels eines Optikkopfes (1) umfassend eine Kugel (3), **dadurch gekennzeichnet, dass** ein Optikkopf (1) nach einem der Ansprüche 1 bis 8 verwendet wird.

10. Verfahren nach Anspruch 9, wobei eine Spotgrösse (18) des Laserstrahls (5) ausgewählt wird durch die Einbauhöhe und/oder die Beschaffenheit der Kollimationslinse (7).

11. Verfahren nach einem der Ansprüche 9 oder 10, **dadurch gekennzeichnet, dass** der Laserstrahl vor dem Eintreffen auf die Kugel fokussiert wird.

## Claims

1. Optical head (1) for a device for laser transmission welding comprising a housing (2) with an end on the outlet side with respect to a laser beam (5) and a ball (3) mounted in the housing (2), wherein the ball (3) is made of a material whose refractive index is greater than 1,45,
**characterized in that**
an air bearing (10) for bearing the ball (3) is associated with the housing (2), the air bearing comprising an opening (11) for the passage of the laser beam (5),
wherein the optical head (1) has a converging lens (8) which is designed and/or arranged in the housing in such a way that the laser beam (5) is focused on the ball (3) before it arrives, and
wherein the opening measures a maximum of 4 mm in diameter.

2. Optical head (1) according to claim 1, **characterized in that** the ball (3) is made of a material whose refractive index is at least 1,6 and preferably at least 1.7.

3. Optical head (1) according to any of the preceding claims, **characterised in that** the diameter of the ball (3) is less than or equal to 15 mm, preferably less than or equal to 10 mm.

4. Optical head (1) according to any of the foregoing claims, **characterised by** a restraint (9) arranged on the housing (2) for retaining the ball (3).

5. Optical head (1) according to any of the foregoing claims, wherein the ball (3) is slidably mounted in a cylindrical shaft portion (4) of the housing (2), **characterized by** a collimating lens (7) arranged to substantially collimate the laser beam (5) before it strikes the ball (3).

6. Opticalhead (1) according to one of claims 5, **characterised in that** a spot size (18) is determined by an installation height and/or a properties and condition of the collimating lens (7).

7. Opticalhead (1) according to at least one of claims 1 to 6, **characterized in that** the opening measures a maximum of 2 mm in diameter.

8. Opticalhead (1) according to one of claims 1 or 7, **characterized in that** the air bearing (10) comprises, in addition to the opening (11), at least one recess (19) for the passage of compressed air.

9. Method for welding two joining partners (13, 14) by laser transmission welding by means of an optical head (1) comprising a ball (3), **characterised in that** an optical head (1) according to one of claims 1 to 8 is used.

10. Method according to claim 9, wherein a spot size (18) of the laser beam (5) is selected by the installation height and/or the properties and condition of the collimating lens (7).

11. Method according to any one of claims 9 or 10, **characterised in that** the laser beam is collimated immediately before striking the ball.

## Revendications

1. Tête optique (1) pour un dispositif de soudage par transmission laser, comprenant un boîtier (2) comportant une extrémité côté sortie par rapport à un faisceau laser (5) et une bille (3) montée dans le boîtier (2),
la bille (3) étant constituée d'un matériau dont l'indice de réfraction est supérieur à 1,45, **caractérisée en ce que**
le boîtier (2) est associé à un palier d'air (10) destiné au montage de la bille (3), lequel palier d'air comprend une ouverture (11) destinée au passage du faisceau laser (5),
la tête optique (1) comprenant en outre une lentille convergente (8) qui est fournie et/ou agencée dans le boîtier de telle sorte que le faisceau laser (5) est focalisé sur la bille (3) avant son arrivée, et
l'ouverture mesurant au maximum 4 mm de diamètre.

2. Tête optique (1) selon la revendication 1, **caractérisée en ce que** la bille (3) est constituée d'un matériau dont l'indice de réfraction est d'au moins 1,6, de préférence d'au moins 1,7.

3. Tête optique (1) selon l'une des revendications précédentes, **caractérisée en ce que** le diamètre de la bille (3) est inférieur ou égal à 15 mm, de préférence inférieur ou égal à 10 mm.

4. Tête optique (1) selon l'une des revendications précédentes, **caractérisée par** un dispositif de retenue (9) disposé au niveau du boîtier (2) pour retenir la bille (3).

5. Tête optique (1) selon l'une des revendications précédentes, la bille (3) étant montée coulissante dans une section d'arbre cylindrique (4) du boîtier (2), **caractérisée par** une lentille de collimation (7) qui est conçue pour collimater sensiblement le faisceau laser (5) avant son impact sur la bille (3).

6. Tête optique (1) selon la revendication 5, **caractérisée en ce qu'**une dimension de point (18) est déterminée par une hauteur d'installation et/ou par une nature de la lentille de collimation (7).

7. Tête optique (1) selon au moins l'une des revendications 1 à 6, **caractérisée en ce que** l'ouverture mesure au maximum 2 mm de diamètre.

8. Tête optique (1) selon l'une des revendications 1 ou 7, **caractérisée en ce que** le palier d'air (10) comprend, en plus de l'ouverture (11), au moins un évidement (19) destiné au passage d'air comprimé.

9. Procédé de soudage de deux partenaires d'assemblage (13, 14) par soudage par transmission laser au moyen d'une tête optique (1) comprenant une bille (3), **caractérisé en ce qu'**une tête optique (1) selon l'une des revendications 1 à 8 est utilisée.

10. Procédé selon la revendication 9, une dimension de point (18) du faisceau laser (5) étant choisie par la hauteur d'installation et/ou par la nature de la lentille de collimation (7).

11. Procédé selon l'une des revendications 9 ou 10, **caractérisé en ce que** le faisceau laser est focalisé sur la bille avant son arrivée.
